# EUROPEAN PATENT SPECIFICATION

(11) **EP 3 128 669 B1**
(45) Date of publication and mention of the grant of the patent: **09.09.2020**
(21) Application number: 15772913.8
(22) Date of filing: 31.03.2015
(51) Int. Cl.: H02P 27/06, H02P 3/18, H02P 27/14

(54) **SAFETY CONTROL DEVICE**
SICHERHEITSSTEUERUNGSVORRICHTUNG
DISPOSITIF DE COMMANDE DE SÉCURITÉ

(30) Priority: 03.04.2014 JP 2014077049
(43) Date of publication of application: 08.02.2017
(73) Proprietor: Fuji Electric Co., Ltd., Kawasaki-shi, Kanagawa 210-9530 (JP)
(72) Inventor: SATO, Ikuya, Kawasaki-shi, Kanagawa 210-9530 (JP)
(74) Representative: Appelt, Christian W.
(86) International application number: PCT/JP2015/060136
(87) International publication number: WO 2015/152245

(56) References cited:
- EP-A1- 2 372 900
- WO-A1-2014/199732
- WO-A1-2014/199732
- JP-A- 2009 081 951
- JP-A- 2010 252 567
- JP-A- 2010 284 051
- JP-A- 2013 085 325

## Description

### Technical Field

The present invention relates to a safety control device of an inverter which drives a motor.

### Background Art

An inverter wherein connections are switched between a positive voltage terminal and negative voltage terminal, to which a direct current voltage is applied, and alternating current voltage output terminals by switching elements (semiconductor switches), thus converting the direct current voltage to alternating current voltages, and the alternating current voltages are output from the alternating current voltage output terminals, is provided. The inverter is utilized as one portion of a motor drive system by being connected to a motor.

In recent years, in order to avoid an accident involving human damage caused by a malfunction in electrical equipment or the like, various international standards set so as to keep the risk within an allowable range have been established. For example, in IEC61800-5-2, it is required to mount an STO (Safety Torque Off) function to reliably stop a motor when bringing the motor to an emergency stop. Herein, the torque of the motor is proportional to current flowing to the motor. Consequently, in order to realize the torque off which completely stops the motor, it is only necessary to cut off the current flowing to the motor.

Therefore, with regard to a two-level inverter, for example, PTL 1 proposes a safety control device including a circuit which forcibly turns off all upper-arm switching elements connected to a positive voltage terminal and a circuit which forcibly turns off all lower-arm switching elements connected to a negative voltage terminal. According to the safety control device, as means for stopping the output of the inverter are provided made redundant, it is possible to completely realize the torque off of the motor.

### Citation List

### Patent Literature

PTL 1: JP-A-2010-284051
From Document EP 2 372 900 A1 a similar safety control device of inverter including a main circuit is known, which also comprises a first torque off circuit and a second torque off circuit, essentially in line with the introductory portion of claim 1.

### Summary of Invention

### Technical Problem

However, with an inverter of high voltage and large capacity or the like, the device increases in size, resulting in an enormous amount of wiring of a drive circuit of switching elements in the inverter. Therefore, when it comes to providing, for example, a safety control device which forcibly turns off all switching elements of three phases, as heretofore known, there arises the problem that the number of wires in the wiring for carrying out the control to turn off the switching elements increases, leading to an increase in manufacturing cost and to the complexity of manufacturing operation.

The invention, having been contrived bearing in mind the heretofore described circumstances, has its object to provide a safety control device, the configuration of which is simplified without reducing the reliability on the torque off of a motor.

### Solution to Problem

The invention is realized by a safety-control device according to claim 1, claim 2 relates to a specific advantageous realization of the safety control device according to claim 1.

The invention provides a system comprising a safety control device and an inverter, the inverter including a main circuit which has three phase upper-arm switching elements connected to a positive voltage terminal and three phase lower-arm switching elements connected to a negative voltage terminal, and which has, as a phase output terminal, a connection point of each phase pair of the three phase upper-arm switching elements and three phase lower-arm switching elements; and a control device which outputs alternating current voltages to a motor from the respective phase output terminals of the main circuit by outputting pulses which turn on and off the three phase upper arm switching elements and three phase lower-arm switching elements, the safety control device comprising:a first torque off circuit which, in response to a first torque off command (TOF1), turns off two phase upper-arm switching elements, of the three phase upper-arm switching elements, regardless of the condition of generation of the pulses from the control device; anda second torque off circuit which, in response to a second torque off command (TOF2), turns off two phase lower-arm switching elements having the same phases as the two phase upper-arm switching elements, regardless of the condition of generation of the pulses from the control device,characterized in that the main circuit includes three phase first reverse blocking type switching elements, the emitters of which are connected to a neutral point which generates a voltage intermediate between the positive voltage terminal and the negative voltage terminal,and the collectors of which are connected to the respective three phase output terminals of the main circuit; and three phase second reverse blocking type switching elements, the collectors of which are connected to the neutral point, and the emitters of which are connected to the respective three phase output terminals of the main circuit, wherein the first torque off circuit, in response to the first torque off command (TOF1), turns off the second reverse blocking type switching elements corresponding to the two phase upper-arm switching elements, regardless of the condition of generation of the pulses from the control device, and the second torque off circuit, in response to the second torque off command (TOF2), turns off the first reverse blocking type switching elements corresponding to the two phase lower-arm switching elements, regardless of the condition of generation of the pulses from the control device, wherein the first torque off circuit turns off the two phase upper-arm switching elements and the second reverse blocking type switching elements corresponding to the two phase upper-arm switching elements a predetermined time later than a point at which the first torque off command (TOF1) is generated, and the second torque off circuit turns off the two phase lower-arm switching elements and the first reverse blocking type switching elements corresponding to the two phase lower-arm switching elements a predetermined time later than a point at which the second torque off command (TOF2) is generated.

### Advantageous Effects of Invention

According to the invention, the first torque off circuit turns off upper-arm switching elements of two phases in response to the first torque off command, and the second torque off circuit turns off lower-arm switching elements of the same two phases in response to the second torque off command. As the supply of current to the motor from the main circuit is thereby cut off, it is possible to reduce the torque of the motor to 0. According to the invention, two phases' worth of wires suffice for carrying out the control to turn off the switching elements in order to reduce the torque of the motor to 0. Consequently, it is possible to reduce the safety control device to a simple configuration. Also, even when one of the first torque off circuit or second torque off circuit does not operate for some reason, no magnetic field which rotates the rotor is generated in the motor in the event that at least one torque off circuit turns off upper-arm switching elements or lower-arm switching elements of two phases. In this way, according to the invention, as duplicate means which prevent the generation of a magnetic field which rotates the rotor are provided, it is possible to safely realize the torque off of the motor.

### Brief Description of Drawings

[Fig. 1] Fig. 1 is a circuit diagram showing a configuration of a two-level inverter which is a first embodiment of the invention.
[Fig. 2] Fig. 2 is a chart illustrating an aspect in which to switch switching elements between on and off at normal time in the first embodiment.
[Fig. 3] Fig. 3 is a chart showing potential differences between output terminals in modes at normal time in the first embodiment.
[Fig. 4] Fig. 4 is a chart illustrating an aspect in which to switch the switching elements between on and off when only one torque off command is generated in the first embodiment.
[Fig. 5] Fig. 5 is a chart illustrating modes in which to switch the switching elements between on and off when blocking signals are generated in the first embodiment.
[Fig. 6] Fig. 6 is a circuit diagram showing a configuration of a three-level inverter which is a second embodiment of the invention.
[Fig. 7] Fig. 7 is a chart illustrating an aspect in which to switch switching elements between on and off at normal time in the second embodiment.
[Fig. 8] Fig. 8 is a chart showing potential differences between output terminals in modes at normal time in the second embodiment.
[Fig. 9] Fig. 9 is a chart illustrating modes in which to switch the switching elements between on and off when blocking signals are generated in the second embodiment.

### Description of Embodiments

Hereafter, a description will be given, while referring to the drawings, of embodiments of the invention.

### <First Embodiment>

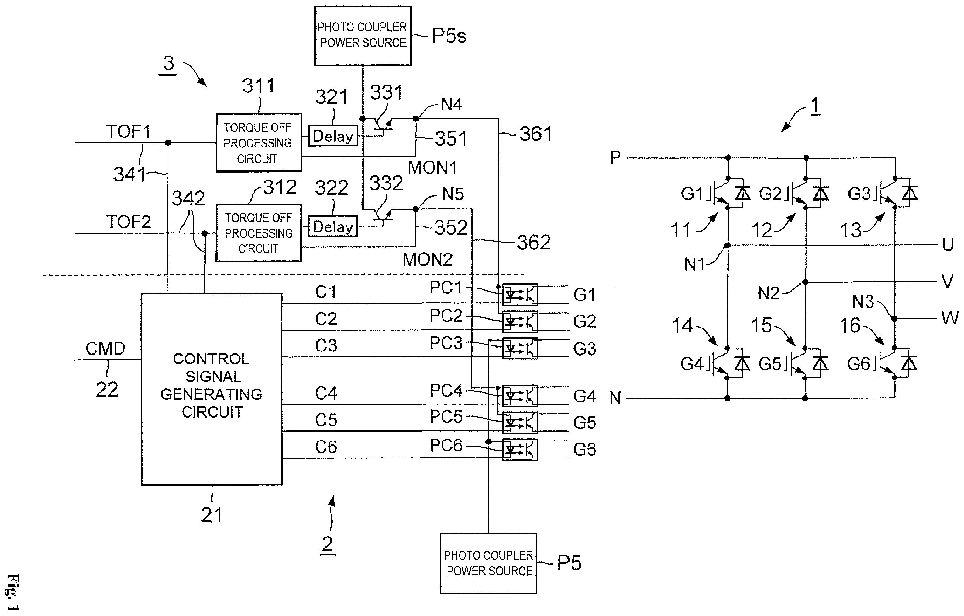

Fig. 1 is a circuit diagram showing a configuration of a two-level inverter which is a first embodiment of the invention. As shown in Fig. 1, the two-level inverter is configured of a main circuit 1, a control device 2, and a safety control device 3.

The main circuit 1 has U-phase, V-phase, and W-phase upper-arm switching elements 11 to 13 and U-phase, V-phase, and W-phase lower-arm switching elements 14 to 16. Each switching element is configured of a semiconductor switching element, such as an IGBT (Insulated Gate Bipolar Transistor) or an MOSFET, and a free wheeling diode connected in inverse parallel to the semiconductor switching element. The collectors of the IGBTs of the upper-arm switching element 11 to 13 are connected to a positive voltage terminal P, and the emitters of the IGBTs of the lower-arm switching elements 14 to 16 are connected to a negative voltage terminal N. Further, the emitters of the IGBTs of the upper-arm switching elements 11 to 13 are connected respectively to the collectors of the IGBTs of the lower-arm switching elements 14 to 16, and nodes N1, N2, and N3, at each of which the emitter and the corresponding collector are connected to each other, form a U-phase output terminal U, a V-phase output terminal V, and a W-phase output terminal W.

There is a converter (not shown) at the previous stage of the two-level inverter, and the converter outputs a direct current voltage between the positive voltage terminal P and the negative voltage terminal N. The two-level inverter converts the direct current voltage between the positive voltage terminal P and the negative voltage terminal N to three phase alternating current voltages, and outputs the voltages to the U-phase winding, V-phase winding, and W-phase winding of a motor (not shown), respectively, from the U-phase output terminal U, V-phase output terminal V, and W-phase output terminal W. The motor is, for example, a synchronous motor.

The control device 2 has a control signal generating circuit 21 and photo couplers PC1 to PC6. The control signal generating circuit 21 is a circuit which generates control signals C1 to C3 for switching the upper-arm switching element 11 to 13 between on and off and control signals C4 to C6 for switching the lower-arm switching elements 14 to 16 between on and off. The control signals C1 to C6 generated by the control signal generating circuit 21 pass respectively through the photo couplers PC1 to PC6 and change to gate signals G1 to G6, and the gate signals G1 to G6 are supplied respectively to the gates of the IGBTs of the switching elements 11 to 16.

The photo couplers PC1 to PC6 are each configured of a photodiode and a phototransistor. The control signals C1 to C6 are supplied respectively to the cathodes of the photodiodes of the photo couplers PC1 to PC6. The anodes of the photodiodes of the photo couplers PC3 and PC6 are connected to a photo coupler power source P5. Further, in the inverter, the gate signals G1 to G6 to be supplied respectively to the IGBTs of the switching elements 11 to 16 are generated based on the collector-emitter voltages of the respective phototransistors of the photo couplers PC1 to PC6.

The safety control device 3 has torque off processing circuits 311 and 312, delay circuits 321 and 322, and transistors 331 and 332. The transistor 331 is such that the collector thereof is connected to a photo coupler power source P5s, while the emitter thereof is connected to the anodes of the photodiodes of the photo couplers PC1 and PC2 via a feed line 361. Also, the transistor 332 is such that the collector thereof is connected to the photo coupler power source P5s, while the emitter thereof is connected to the anodes of the photodiodes of the photo couplers PC4 and PC5 via a feed line 362.

The torque off processing circuit 311, at normal time, supplies an H level signal to the base of the transistor 331 via the delay circuit 321. Also, the torque off processing circuit 312, at normal time, supplies an H level signal to the base of the transistor 332 via the delay circuit 322. Consequently, at normal time, the transistors 331 and 332 turn on, and power from the photo coupler power source P5s is supplied to the photodiodes of the photo couplers PC1 and PC2 via the transistor 331 and to the photodiodes of the photo couplers PC4 and PC5 via the transistor 332.

Meanwhile, a torque off command TOF1 is input into the torque off processing circuit 311, while a torque off command TOF2 is input into the torque off processing circuit 312. In the first embodiment, the torque off commands TOF1 and TOF2 are commands generated based on a common event, such as a pressing operation of a stop button by a user of the motor. However, the torque off commands TOF1 and TOF2 do not always have to be the commands based on the common event, but the torque off commands TOF1 and TOF2 may be generated based on commands different in type or generation source.

The torque off processing circuit 311, when given the torque off command TOF1, switches the signal, which is to be given to the base of the transistor 331 via the delay circuit 312, from H level to L level. Consequently, at a timing at which the delay time of the delay circuit 321 elapses after the torque off command TOF1 is input into the torque off processing circuit 311, the transistor 331 turns off, and the supply of power to the photodiodes of the photo couplers PC1 and PC2 is cut off.

In the same way, the torque off processing circuit 312, when given the torque off command TOF2, switches the signal, which is to be given to the base of the transistor 332 via the delay circuit 322, from H level to L level. Consequently, at a timing at which the delay time of the delay circuit 322 elapses after the torque off command TOF2 is input into the torque off processing circuit 312, the transistor 332 turns off, and the supply of power to the photodiodes of the photo couplers PC4 and PC5 is cut off.

Also, the torque off processing circuit 311 takes in the potential of the node N4, to which the emitter of the transistor 331 is connected, as a monitoring signal MON1, and based on the monitoring signal MON1, determines whether to turn on or off the transistor 331. In the same way, the torque off processing circuit 312 takes in the potential of the node N5, to which the emitter of the transistor 332 is connected, as a monitoring signal MON2, and based on the monitoring signal MON2, determines whether to turn on or off the transistor 332.

The above is the configuration of the two-level inverter.

Next, a description will be given of an operation of the two-level inverter at normal time. When the two-level inverter is in normal operation, the transistors 331 and 332 are turned on, and the power from the photo coupler power source P5s is supplied to the photodiodes of the photo couplers PC1 and PC2 via the transistor 331 and to the photodiodes of the photo couplers PC4 and PC5 via the transistor 332. When a control command CMD is given to the control signal generating circuit 21, the control signal generating circuit 21 generates the control signals C1 to C6. The control signals C1 to C6 pass through the photo couplers PC1 to PC6 and change to the gate signals G1 to G6, and the gate signals G1 to G6 are supplied respectively to the gates of the IGBTs of the switching elements 11 to 16. By so doing, the switching elements 11 to 16 are switched between on and off, and the three phase alternating current voltages are output to the motor from the output terminals U, V, and W.

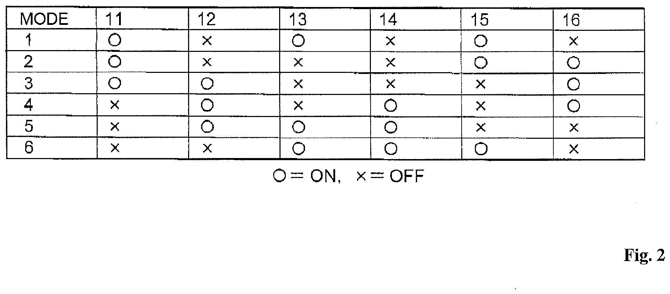

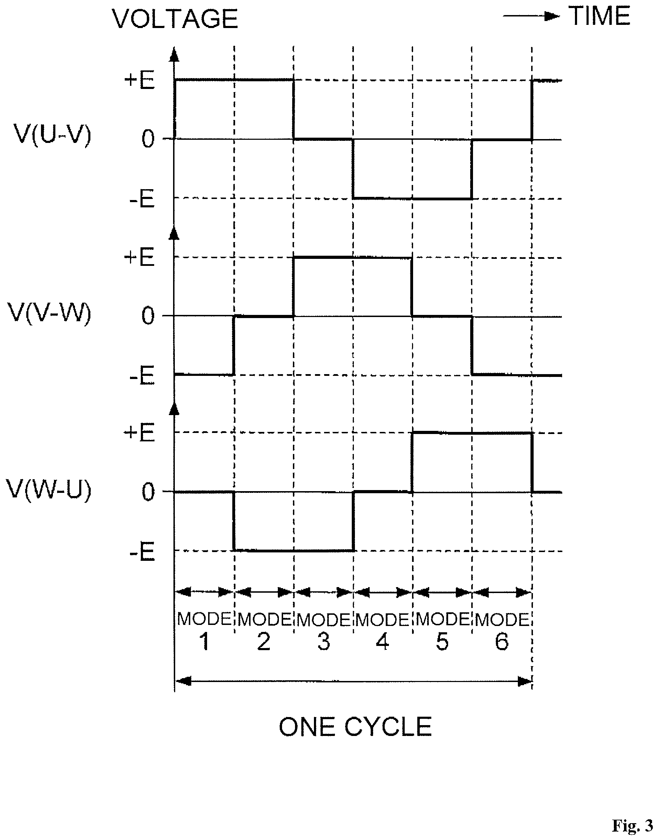

Fig. 2 is a chart illustrating an aspect in which to switch the switching elements 11 to 16 between on and off. As the on and off states of the switching elements 11 to 16 when the two-level inverter is in normal operation, there are modes 1 to 6 shown in Fig. 2. Fig. 3 is a chart showing potential differences between the output terminals in the modes. In the example shown in Fig. 3, a direct current voltage +E is applied between the positive voltage terminal P and the negative voltage terminal N. V (U-V) shown in Fig. 3 denotes the potential difference of the U-phase output terminal U from the V-phase output terminal V, V (V-W) denotes the potential difference of the V-phase output terminal V from the W-phase output terminal W, and V (W-U) denotes the potential difference of the W-phase output terminal W from the U-phase output terminal U. The two-level inverter, by switching the switching elements 11 to 16 between on and off, outputs three types of voltages +E, 0, and -E to the motor, as shown in Fig. 3.

For example, in the case of mode 1, the upper-arm switching elements 11 and 13 and the lower-arm switching element 15 turn on, while the upper-arm switching element 12 and the lower-arm switching elements 14 and 16 turn off. Therefore, the W-phase output terminal W and the U-phase output terminal U become equal in potential, and current flows to the V-phase output terminal V, via the motor, from the U-phase output terminal U and W-phase output terminal W. In this case, V (U-V) is +E, V (V-W) is -E, and V (W-U) is 0.

As in Figs. 2 and 3, by the switching elements 11 to 16 switching between on and off as time elapses, modes 1 to 6 change, and V (U-V), V (V-W), and V (W-U) change. By the two-level inverter supplying these kinds of alternating current voltages to the motor through the U-phase output terminal U, V-phase output terminal V, and W-phase output terminal W, a rotating magnetic field is generated in the motor, and the rotor of the motor rotates.

The above is the operation of the two-level inverter at normal time.

Next, a description will be given of an operation of the two-level inverter when given the torque off commands TOF1 and TOF2. When the torque off commands TOF1 and TOF2 are generated, two types of operations are carried on in parallel. One is a stop control of the two-level inverter by the control signal generating circuit 21, and the other is a stop control of the two-level inverter by the torque off processing circuits 311 and 312.

Firstly, a description will be given of the former stop control of the two-level inverter by the control signal generating circuit 21. When the torque off commands TOF1 and TOF2 are input into the control signal generating circuit 21, the control signal generating circuit 21 controls the on-times of the switching elements 11 to 16 so that the current flowing to the motor decreases gradually. As a result of this, the torque of the motor decreases gradually, leading to a decrease in the rotation speed of the motor, and eventually, the motor stops.

Next, a description will be given of the latter stop control of the two-level inverter by the torque off processing circuits 311 and 312. The torque off processing circuits 311 and 312, when given the torque off commands TOF1 and TOF2, switch the output signals, which are to be given to the respective delay circuits 321 and 322, from H level to L level. As a result of this, at a timing at which the delay times of the delay circuits 321 and 322 elapse after the torque off commands TOF1 and TOF2 are input into the respective torque off processing circuits 311 and 312, the transistors 331 and 332 turn off, and the supply of power to the photo couplers PC1, PC2, PC4, and PC5 is cut off. Meanwhile, the torque off processing circuits 311 and 312 take in the respective monitoring signals MON1 and MON2, and monitor the condition of supply of the power of the photo coupler power source P5s to the photo couplers PC1, PC2, PC4, and PC5. Further, when it is confirmed that the supply of power to the photo couplers PC1, PC2, PC4, and PC5 is cut off, the torque off processing circuits 311 and 312 transmit a signal, which indicates that torque off is carried out, to a higher level device (not shown) of the safety control device 3.

As the transmission paths of the control signals C1, C2, C4, and C5 are cut off when the supply of power to the photo couplers PC1, PC2, PC4, and PC5 is cut off, the switching elements 11, 12, 14, and 15 turn off regardless of the control signals C1 to C6. Therefore, in the main circuit 1, it is only the switching elements 13 and 16 which switch between on and off. Therefore, the torque of the motor connected to the main circuit 1 comes to 0.

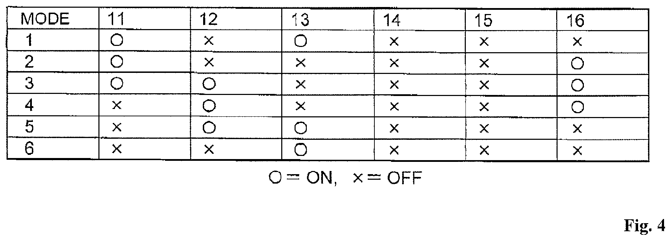

Herein, a detailed description will be given, as follows, of the reason that there are two torque off commands TOF1 and TOF2. Firstly, for example, it is supposed that no torque off command TOF1 is generated, and only the torque off command TOF2 is generated, and that the transistor 331 turns on, and the transistor 332 turns off. Fig. 4 is a chart illustrating an aspect in which to switch the switching elements 11 to 16 between on and off in this case. As shown in Fig. 4, as no current flows through the windings of the motor when in modes 1, 5, and 6, no magnetic field which rotates the rotor through one revolution is generated in the motor. Therefore, no sufficient torque to rotate the motor is generated. However, as current flows through the windings of the motor when in modes 2 to 4, the torque of the motor is not completely turned off. In this way, in the aspect in which only the transistor 332 turns off, the torque is not completely turned off depending on the mode. This also applies to a case in which the transistor 331 turns on and the transistor 332 turns off. Therefore, in the first embodiment, the transistors 331 and 332 are turned off in response to the torque off commands TOF1 and TOF2.

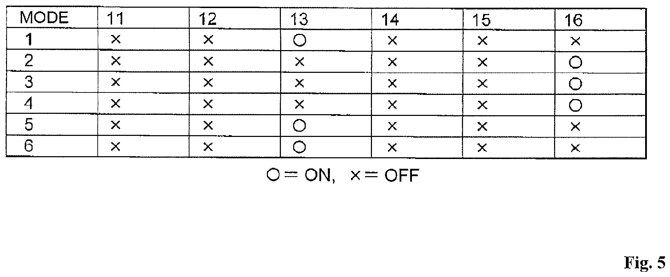

Fig. 5 is a chart illustrating an aspect in which to switch the switching elements 11 to 16 between on and off when the torque off commands TOF1 and TOF2 are generated. In this case, in the main circuit 1, as the upper-arm switching elements 11 and 12 and the lower-arm switching elements 14 and 15 turn off, and the upper-arm switching element 13 and the lower-arm switching element 16 are switched between on and off, no current flows to the motor in all the modes of Fig. 5. Therefore, the torque of the motor is completely turned off.

Herein, the delay times of the delay circuits 321 and 322 are set to be longer than a time required for the stop control of the inverter by the control signal generating circuit 21, thus making the stop control of the inverter by the torque off processing circuits 311 and 312 later than the time required for the stop control of the inverter by the control signal generating circuit 21. In this way, two types of operations are carried on in parallel when the torque off commands TOF1 and TOF2 are generated, but as the delay circuits 321 and 322 exist, the torque off processing circuits 311 and 312 carry out the stop control of the two-level inverter after the control signal generating circuit 21 carries out the stop control of the two-level inverter. The reason for providing a time difference and carrying on two types of stop controls in this way is as follows. Firstly, assuming to adopt a configuration wherein only the control signal generating circuit 21 carries out the stop control of the two-level inverter, there is the possibility that the stop control of the two-level inverter is not normally carried out when some malfunction occurs in the control signal generating circuit 21. Meanwhile, assuming to adopt a configuration wherein only the torque off processing circuits 311 and 312 carry out the stop control of the two-level inverter, the following problem arises. That is, when the torque off processing circuits 311 and 312 cut off the supply of power to the photo couplers PC1, PC2, PC4, and PC5, there is the possibility that in a condition in which the motor is rotating, the IGBTs of the switching elements 11, 12, 14, and 15 are turned off, a large reverse current flows via the free wheeling diodes of the switching elements 11, 12, 14, and 15, the voltage between the positive voltage terminal P and the negative voltage terminal N rises, and an overvoltage is applied to the IGBTs or free wheeling diodes, thus causing damage thereto. Consequently, the torque off processing circuits 311 and 312 are provided in preparation for a case in which the stop control of the two-level inverter by the control signal generating circuit 21 ended in failure.

The above is the operation of the two-level inverter when given the torque off commands TOF1 and TOF2.

In a heretofore known two-level inverter, the three phase upper-arm switching elements 11, 12, and 13 are forcibly turned off in response to the torque off command TOF1, and the three phase lower-arm switching elements 14, 15, and 16 are forcibly turned off in response to the torque off command TOF2. Therefore, in the heretofore known technology, it is necessary to cut off the supply of power to three phases' worth of photo couplers PC1 to PC3 in response to the torque off command TOF1, and cut off the supply of power to three phases' worth of photo couplers PC4 to PC6 in response to the torque off command TOF2, and three phases' worth of wiring for this purpose is required. As opposed to this, in the first embodiment, the two phase upper-arm switching elements 11 and 12 are forcibly turned off in response to the torque off command TOF1, and the two phase lower-arm switching elements 14 and 15 are forcibly turned off in response to the torque off command TOF2. Therefore, in the first embodiment, it is only necessary to cut off the supply of power to two phases' worth of photo couplers PC1 and PC2 in response to the torque off command TOF1, and cut off the supply of power to two phases' worth of photo couplers PC4 and PC5 in response to the torque off command TOF2, and there only has to be two phases' worth of wiring for this purpose (specifically, there only have to be two phases' worth of destinations to be connected to the respective feed lines 361 and 362). Consequently, according to the first embodiment, it is possible to reduce the number of wires without damaging the reliability on the complete torque off of the motor, compared with the heretofore known two-level inverter. Consequently, it is possible to reduce the manufacturing cost of, and simplify the manufacturing operation of, the two-level inverter.

In the first embodiment, the upper-arm switching elements and lower-arm switching elements corresponding to the U-phase and V-phase, except the W-phase, are forcibly turned off in response to the torque off commands TOF1 and TOF2, but the upper-arm switching elements and lower-arm switching elements corresponding to the V-phase and W-phase, except the U-phase, may be forcibly turned off, or the upper-arm switching elements and lower-arm switching elements corresponding to the U-phase and W-phase, except the V-phase, may be forcibly turned off.

### <Second Embodiment>

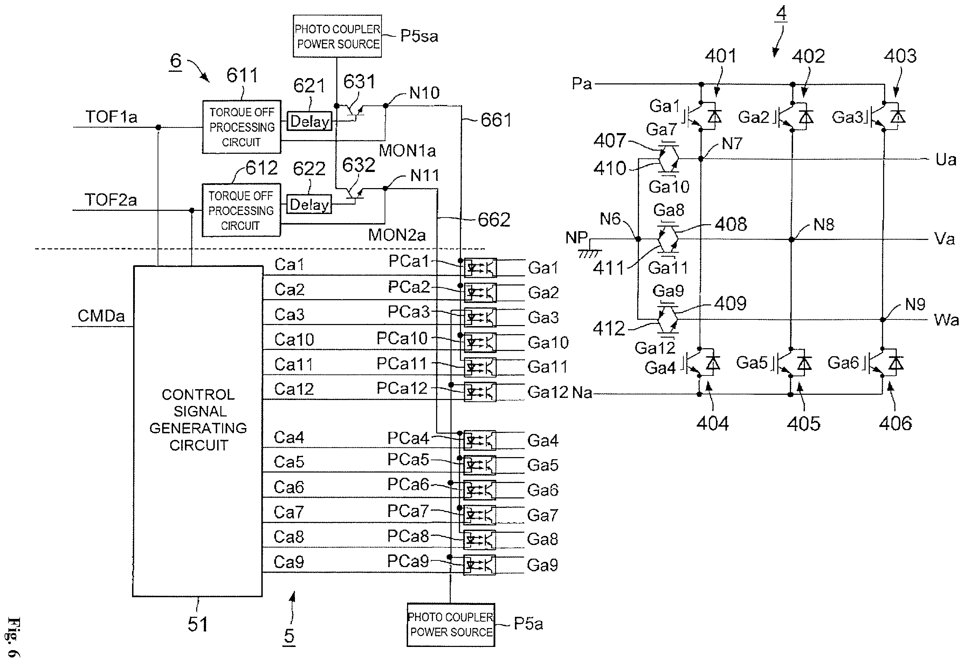

Fig. 6 is a circuit diagram showing a configuration of a three-level inverter which is a second embodiment of the invention. In the second embodiment, a main circuit 4 has U-phase, V-phase, and W-phase upper-arm switching elements 401, 402, and 403, and U-phase, V-phase, and W-phase lower-arm switching elements 404, 405, and 406, in the same way as in the first embodiment. The switching elements 401 to 406 are each configured of an IGBT and a free wheeling diode which are connected in inverse parallel to each other. The collectors of the IGBTs of the upper-arm switching elements 401 to 403 are connected to a positive voltage terminal Pa, and the emitters of the IGBTs of the lower-arm switching elements 404 to 406 are connected to a negative voltage terminal Na. Further, the emitters of the IGBTs of the upper-arm switching elements 401 to 403 are connected respectively to the collectors of the IGBTs of the lower-arm switching elements 404 to 406, and a node N7, a node N8, and a node N9, at each of which the emitter and the corresponding collector are connected to each other, form a U-phase output terminal Ua, a V-phase output terminal Va, and a W-phase output terminal Wa.

U-phase, V-phase, and W-phase first reverse blocking type switching elements 407 to 409 are each configured of an IGBT, and the emitters of the IGBTs are connected to a neutral point NP, while the collectors of the IGBTs are connected to the respective nodes N7, N8, and N9. Also, U-phase, V-phase, and W-phase second reverse blocking type switching elements 410 to 412 are each configured of an IGBT, and the collectors of the IGBTs are connected to the neutral point NP, while the emitters of the IGBTs are connected to the respective nodes N7, N8, and N9. Herein, the neutral point NP is fixed to a voltage intermediate between the respective voltages of the positive voltage terminal Pa and negative voltage terminal Na (in the illustrated example, to the ground).

A control device 5 has a control signal generating circuit 51 and photo couplers PCa1 to PCa12. The control signal generating circuit 51 is a circuit which generates control signals Ca1 to Ca3 for switching the upper-arm switching elements 401 to 403 of the main circuit 4 between on and off, control signals Ca4 to Ca6 for switching the lower-arm switching elements 404 to 406 between on and off, control signals Ca7 to Ca9 for switching the first reverse blocking type switching elements 407 to 409 between on and off, and control signals Ca10 to Ca12 for switching the second reverse blocking type switching elements 410 to 412 between on and off. The control signals Ca1 to Ca12 generated by the control signal generating circuit 51 pass respectively through the photo couplers PCa1 to PCa12 and change to gate signals Ga1 to Ga12, and the gate signals Ga1 to Ga12 are supplied respectively to the gates of the IGBTs of the switching elements 401 to 412.

The control signals Ca1 to Ca12 are supplied respectively to the cathodes of the photodiodes of the photo couplers PCa1 to PCa12. The anodes of the photodiodes of the photo couplers PCa3, PCa6, PCa9, and PCa12 are connected to a photo coupler power source P5a. Further, in the inverter, the gate signals Ga1 to Ga12 to be supplied respectively to the IGBTs of the switching elements 401 to 412 are generated based on the collector-emitter voltages of the respective phototransistors of the photo couplers PCa1 to PCa12.

In a safety control device 6, the collectors of transistors 631 and 632 are connected to a photo coupler power source P5sa. The emitter of the transistor 631 is connected via a feed line 661 to the anodes of the respective photodiodes of the photo couplers PCa1, PCa2, PCa10, and PCa11. Also, the emitter of the transistor 632 is connected via a feed line 662 to the anodes of the respective photodiodes of the photo couplers PCa4, PCa5, PCa7, and PCa8. Torque off processing circuits 611 and 612 are connected to the bases of the transistors 631 and 632 via delay circuits 621 and 622 respectively.
The above is the configuration of the three-level inverter.

Next, a description will be given of an operation of the three-level inverter at normal time. When the three-level inverter is in normal operation, the transistors 631 and 632 are turned on, and the power of the photo coupler power source P5sa is supplied to the photo couplers PCa1, PCa2, PCa10, and PCa11 via the transistor 631 and to the photo couplers PCa4, PCa5, PCa7, and PCa8 via the transistor 632. When a control signal CMDa is given to the control signal generating circuit 51, the control signal generating circuit 51 generates the control signals Ca1 to Ca12. The control signals Ca1 to Ca12 pass respectively through the photo couplers PCa1 to PCa12 and change to the gate signals Ga1 to Ga12, and the gate signals Ga1 to Ga12 are supplied respectively to the gates of the switching elements 401 to 412. By so doing, the switching elements 401 to 412 are switched between on and off, and three phase alternating current voltages are output to the motor from the output terminals Ua, Va, and Wa.

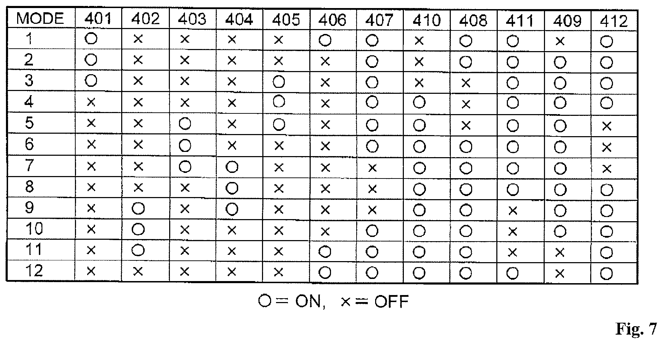

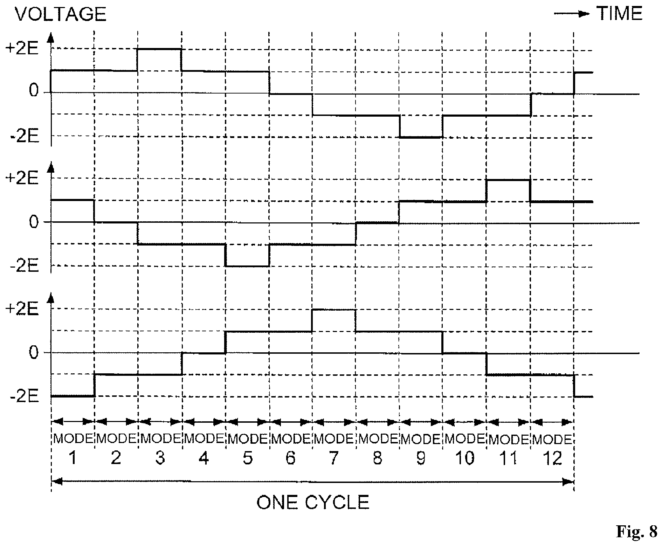

Fig. 7 is a chart illustrating an aspect in which to switch the switching elements 401 to 412 between on and off. As the on and off states of the switching elements 401 to 412 when the three-level inverter is in normal operation, there are modes 1 to 12 shown in Fig. 7. Fig. 8 is a chart showing potential differences between the output terminals in the modes. In the example shown in Fig. 8, a direct current voltage +E is applied between the positive voltage terminal Pa and the neutral point NP and between the neutral point NP and the negative voltage terminal Na. Further, the three-level inverter, by switching the switching elements 401 to 412 between on and off, outputs five types of voltages +2E, +E, 0, -E, and -2E to the motor, as shown in Fig. 8.

For example, in the case of mode 1, the upper-arm switching element 401, the lower-arm switching element 406, and the reverse blocking type switching elements 407, 408, 411, and 412 are turned on, while the upper-arm switching elements 402 and 403, the lower-arm switching elements 404 and 405, and the reverse blocking type switching elements 409 and 410 are turned off. Therefore, current flows to the V-phase output terminal Va and W-phase output terminal Wa, via the motor, from the U-phase output terminal Ua. In this case, V (U-V) is +E, V (V-W) is +E, and V (W-U) is -2E.

As in Figs. 7 and 8, by the switching elements 401 to 412 switching between on and off as time elapses, modes 1 to 12 change, and V (U-V), V (V-W), and V (W-U) change. By the three-level inverter supplying these kinds of alternating current voltages to the motor through the U-phase output terminal Ua, V-phase output terminal Va, and W-phase output terminal Wa, a rotating magnetic field is generated in the motor, and the rotor of the motor rotates.

The above is the operation of the three-level inverter at normal time.

Next, a description will be given of an operation of the three-level inverter when given the torque off commands TOF1a and TOF2a. When torque off commands TOF1a and TOF2a are generated, two types of operations are carried on in parallel. One is a stop control of the three-level inverter by the control signal generating circuit 51, and the other is a stop control of the three-level inverter by the torque off processing circuits 611 and 612.

Firstly, a description will be given of the former stop control of the three-level inverter by the control signal generating circuit 51. When the torque off commands TOF1a and TOF2a are input into the control signal generating circuit 51, the control signal generating circuit 51 controls the on-times of the switching elements 401 to 412 so that the current flowing to the motor from the three-level inverter decreases gradually. As a result of this, the torque of the motor decreases gradually, leading to a decrease in the rotation speed of the motor, and eventually, the motor stops.

Next, a description will be given of the latter stop control of the three-level inverter by the torque off processing circuits 611 and 612. The torque off processing circuits 611 and 612, when given the torque off commands TOF1a and TOF2a, switch the output signals, which are to be given to the respective delay circuits 621 and 622, from H level to L level. As a result of this, at a timing at which the delay times of the delay circuits 621 and 622 elapse after the torque off commands TOF1a and TOF2a are input into the torque off processing circuits 611 and 612, the transistors 631 and 632 turn off, and the supply of power to the photo couplers PCa1, PCa2, PCa10, PCa11, PCa4, PCa5, PCa7, and PCa8 is cut off. The delay times of the delay circuits 621 and 622 are set to be longer than a time required for the stop control of the inverter by the control signal generating circuit 51. Meanwhile, the torque off processing circuits 611 and 612 take in respective monitoring signals MONla and MON2a, and monitor the condition of power supply to the photo couplers PCa1, PCa2, PCa10, PCa11, PCa4, PCa5, PCa7, and PCa8. Further, when it is confirmed that the supply of power to the photo couplers PCa1, PCa2, PCa10, PCa11, PCa4, PCa5, PCa7, and PCa8 is cut off, the torque off processing circuits 611 and 612 transmit a signal, which indicates that torque off is carried out, to a higher level device (not shown) of the safety control device 6.

When the supply of power to the photo couplers PCa1, PCa2, PCa10, PCa11, PCa4, PCa5, PCa7, and PCa8 is cut off, the switching elements 401, 402, 404, 405, 407, 408, 409, and 410 turn off regardless of the conditions of the control signals Ca1 to Ca12, and in the main circuit 4, it is only the switching elements 403, 406, 411, and 412 which switch between on and off. Therefore, the torque of the motor connected to the main circuit 4 comes to 0.

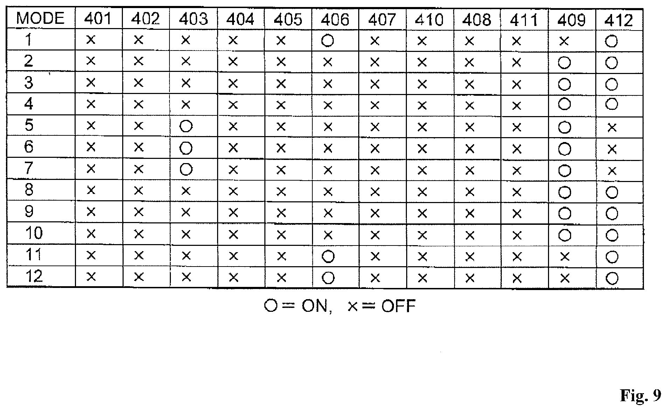

Fig. 9 is a chart illustrating an aspect in which to switch the switching elements 401 to 412 between on and off when the torque off commands TOF1a and TOF2a are generated. In this case, in the main circuit 4, the upper-arm switching elements 401 and 402, the second reverse blocking type switching elements 410 and 411, the lower-arm switching elements 404 and 405, and the first reverse blocking type switching elements 407 and 408 turn off. Further, the upper-arm switching element 403, the lower-arm switching element 406, and the reverse blocking type switching elements 409 and 412 are switched between on and off, but no current flows to the motor in all the modes of Fig. 9. Therefore, the torque of the motor is completely turned off.

In this way, two types of operations are carried on in parallel when the torque off commands TOF1a and TOF2a are generated, but as the delay circuits 621 and 622 exist, the torque off processing circuits 611 and 612 carry out the stop control of the three-level inverter after the control signal generating circuit 51 carries out the stop control of the three-level inverter. The reason for providing a time difference and carrying on two types of stop controls in this way is the same as in the first embodiment.

The above is the operation of the three-level inverter when given the torque off commands TOF1a and TOF2a. In the second embodiment too, it is possible to obtain the same advantageous effects as in the first embodiment.

In the second embodiment, the upper-arm switching elements, lower-arm switching elements, and reverse blocking type switching elements corresponding to the U-phase and V-phase, except the W-phase, are forcibly turned off in response to the first and second torque off commands, but the upper-arm switching elements, lower-arm switching elements, and reverse blocking type switching elements corresponding to the V-phase and W-phase, except the U-phase, may be forcibly turned off, or the upper-arm switching elements, lower-arm switching elements, and reverse blocking type switching elements corresponding to the U-phase and W-phase, except the V-phase, may be forcibly turned off.

Heretofore, a description has been given of the first and second embodiments of the invention, but apart therefrom, other embodiments can also be considered in the invention within the scope of protection as defined by the attached independent claim 1.

### Reference Signs List

1, 4 ...... main circuit, 11 to 13, 401 to 403 ...... upper-arm switching element, 14 to 16, 404 to 406 ...... lower-arm switching element, 2, 5 ...... control device, 21, 51 ...... control signal generating circuit, pcu to pcz ...... photo coupler, 3, 6 ...... safety control device, 311, 312, 611, 612 ...... torque off processing cicrcuit, 321, 322, 621, 622 ...... delay circuit, 331, 332, 631, 632 ...... transistor, 407 to 409 ...... first reverse blocking type switching element, 410 to 412 ...... second reverse blocking type switching element, P5, P5s, P5a, P5sa ...... photo coupler power source, PC1 to PC6, PCa1 to PCa12 ...... photo coupler.

## Claims

1. A system comprising a safety control device and an inverter, the inverter includes a main circuit (1, 4) which has three phase upper-arm switching elements connected to a positive voltage terminal and three phase lower-arm switching elements connected to a negative voltage terminal, and which has, as a phase output terminal, a connection point of each phase pair of the three phase upper-arm switching elements and three phase lower-arm switching elements; and a control device which outputs alternating current voltages to a motor from the respective phase output terminals of the main circuit (1, 4) by outputting pulses which turn on and off the three phase upper arm switching elements and three phase lower-arm switching elements, the safety control device comprising:
a first torque off circuit (311, 611) which, in response to a first torque off command (TOF1), turns off two phase upper-arm switching elements, of the three phase upper-arm switching elements, regardless of the condition of generation of the pulses from the control device; and
a second torque off circuit (312, 612) which, in response to a second torque off command (TOF2), turns off two phase lower-arm switching elements having the same phases as the two phase upper-arm switching elements, regardless of the condition of generation of the pulses from the control device,
**characterized in that**
the main circuit (1, 4) includes three phase first reverse blocking type switching elements, the emitters of which are connected to a neutral point which generates a voltage intermediate between the positive voltage terminal and the negative voltage terminal, and the collectors of which are connected to the respective three phase output terminals of the main circuit (1, 4); and three phase second reverse blocking type switching elements, the collectors of which are connected to the neutral point, and the emitters of which are connected to the respective three phase output terminals of the main circuit (1, 4), wherein
the first torque off circuit (311, 611), in response to the first torque off command (TOF1), is configured to turn off the second reverse blocking type switching elements corresponding to the two phase upper-arm switching elements, regardless of the condition of generation of the pulses from the control device, and
the second torque off circuit (312, 612), in response to the second torque off command (TOF2), is configured to turn off the first reverse blocking type switching elements corresponding to the two phase lower-arm switching elements, regardless of the condition of generation of the pulses from the control device, wherein
the first torque off circuit (311, 611) is configured to turn off the two phase upper-arm switching elements and the second reverse blocking type switching elements corresponding to the two phase upper-arm switching elements a predetermined time later than a point at which the first torque off command (TOF1) is generated, and
the second torque off circuit (312, 612) is configured to turn off the two phase lower-arm switching elements and the first reverse blocking type switching elements corresponding to the two phase lower-arm switching elements a predetermined time later than a point at which the second torque off command (TOF2) is generated.

2. The system according to claim 1, wherein the first torque off circuit (311, 611) turns off the two phase upper-arm switching elements a predetermined time later than a point at which the first torque off command (TOF1) is generated, and
the second torque off circuit (312, 612) turns off the two phase lower-arm switching elements a predetermined time later than a point at which the second torque off command (TOF2) is generated.

## Patentansprüche

1. System, das eine Sicherheitssteuervorrichtung und einen Wechselrichter umfasst, wobei der Wechselrichter einen Hauptschaltkreis (1, 4) aufweist, welcher dreiphasige Oberarm-Schaltelemente, die mit einem positiven Spannungsanschluss verbunden sind, und dreiphasige Unterarm-Schaltelemente hat, die mit einem negativen Spannungsanschluss verbunden sind, und einen Verbindungspunkt jedes Phasenpaars der dreiphasigen Oberarm-Schaltelemente und der dreiphasigen Unterarm-Schaltelemente als einen Phasenausgangsanschluss hat, und eine Steuervorrichtung, welche Wechselstromspannungen an einen Motor von den jeweiligen Phasenausgangsanschlüssen des Hauptschaltkreises (1, 4) ausgibt, indem Impulse ausgegeben werden, die die dreiphasigen Oberarm-Schaltelemente und die dreiphasigen Unterarm-Schaltelemente ein- und ausschalten, wobei die Sicherheitssteuervorrichtung Folgendes umfasst:
eine erste Drehmoment-Ausschaltschaltung (311, 611), die in Ansprechen auf einen ersten Drehmoment-Ausschaltbefehl (TOF1) zwei Phasen der Oberarm-Schaltelemente der dreiphasigen Oberarm-Schaltelemente unabhängig von der Erzeugungsbedingung der Impulse von der Steuervorrichtung ausschaltet; und
eine zweite Drehmoment-Ausschaltschaltung (312, 612), die in Ansprechen auf einen zweiten Drehmoment-Ausschaltbefehl (TOF2) zwei Phasen der Unterarm-Schaltelemente mit den gleichen zwei Phasen der Oberarm-Schaltelemente unabhängig von der Erzeugungsbedingung der Impulse von der Steuervorrichtung abschaltet,
**dadurch gekennzeichnet, dass**
der Hauptschaltkreis (1, 4) erste rückwärtssperrende dreiphasige Schaltelemente, deren Emitter mit einem Sternpunkt verbunden sind, der eine Spannung zwischen dem positiven Spannungsanschluss und dem negativen Spannungsanschluss erzeugt, und deren Kollektoren mit den jeweiligen dreiphasigen Ausgangsanschlüssen des Hauptstromkreises (1, 4) verbunden sind; und zweite rücksperrende dreiphasige Schaltelemente aufweist, deren Kollektoren mit dem Sternpunkt verbunden sind und deren Emitter mit den jeweiligen dreiphasigen Ausgangsanschlüssen des Hauptschaltkreises (1, 4) verbunden sind, wobei die erste Drehmoment-Ausschaltschaltung (311, 611) in Ansprechen auf den ersten Drehmoment-Ausschaltbefehl (TOF1) derart konfiguriert ist, dass sie die zweiten rückwärtssperrenden Schaltelemente, die den zwei Phasen der Oberarm-Schaltelementen entsprechen, unabhängig von der Erzeugungsbedingung der Impulse von der Steuervorrichtung ausschaltet, und
die zweite Drehmoment-Ausschaltschaltung (312, 612) in Ansprechen auf den zweiten Drehmoment-Ausschaltbefehl (TOF2) derart konfiguriert ist, dass sie die ersten rückwärtssperrenden Schaltelemente, die den zwei Phasen der Unterarm-Schaltelementen entsprechen, unabhängig von der Erzeugungsbedingung der Impulse von der Steuervorrichtung ausschaltet, wobei
die erste Drehmoment-Ausschaltschaltung (311, 611) derart konfiguriert ist, dass sie die zwei Phasen der Oberarm-Schaltelemente und die zweiten rückwärtssperrenden Schaltelemente, die den zwei Phasen der Oberarm-Schaltelemente entsprechen, eine vorbestimmte Zeit später als einen Zeitpunkt, an dem der erste Drehmoment-Ausschaltbefehl (TOF1) erzeugt wird, ausschaltet und
die zweite Drehmoment-Ausschaltschaltung (312, 612) derart konfiguriert ist, dass sie die zwei Phasen der Unterarm-Schaltelemente und die ersten rückwärtssperrenden Schaltelemente, die den zwei Phasen der Unterarm-Schaltelemente entsprechen, eine vorbestimmte Zeit später als einen Zeitpunkt, an dem der zweite Drehmoment-Ausschaltbefehl (TOF2) erzeugt wird, ausschaltet.

2. System nach Anspruch 1, wobei
die erste Drehmoment-Ausschaltschaltung (311, 611) die zwei Phasen der Oberarm-Schaltelemente eine vorbestimmte Zeit später als ab einen Zeitpunkt, an dem der erste Drehmoment-Ausschaltbefehl (TOF1) erzeugt wird, ausschaltet und die zweite Drehmoment-Ausschaltschaltung (312, 612) die zwei Phasen der Unterarm-Schaltelemente eine vorbestimmte Zeit später als ab einen Zeitpunkt, an dem der zweite Drehmoment-Ausschaltbefehl (TOF2) erzeugt wird, ausschaltet.

## Revendications

1. Système comprenant un dispositif de commande de sécurité et un onduleur, dans lequel l'onduleur inclut un circuit principal (1, 4) qui présente des éléments de commutation de bras supérieur triphasés connectés à une borne de tension positive et des éléments de commutation de bras inférieur triphasés connectés à une borne de tension négative, et qui présente, en tant qu'une borne de sortie de phase, un point de connexion de chaque paire de phases des éléments de commutation de bras supérieur triphasés et des éléments de commutation de bras inférieur triphasés ; et un dispositif de commande qui fournit en sortie des tensions de courant alternatif à un moteur, à partir des bornes de sortie de phase respectives du circuit principal (1, 4), en fournissant en sortie des impulsions qui activent et désactivent les éléments de commutation de bras supérieur triphasés et les éléments de commutation de bras inférieur triphasés, le dispositif de commande de sécurité comprenant :
un premier circuit de coupure de couple (311, 611) qui, en réponse à une première instruction de coupure de couple (TOF1), désactive des éléments de commutation de bras supérieur biphasés, parmi les éléments de commutation de bras supérieur triphasés, indépendamment de la condition de génération des impulsions à partir du dispositif de commande ; et
un second circuit de coupure de couple (312, 612) qui, en réponse à une seconde instruction de coupure de couple (TOF2), désactive les éléments de commutation de bras inférieur biphasés présentant les mêmes phases que les éléments de commutation de bras supérieur biphasés, indépendamment de la condition de génération des impulsions à partir du dispositif de commande ;
**caractérisé en ce que** :
le circuit principal (1, 4) inclut des éléments de commutation de premier type de blocage inverse triphasés, dont les émetteurs sont connectés à un point neutre qui génère une tension intermédiaire entre la borne de tension positive et la borne de tension négative, et dont les collecteurs sont connectés aux bornes de sortie triphasées respectives du circuit principal (1, 4), et des éléments de commutation de second type de blocage inverse triphasés, dont les collecteurs sont connectés au point neutre, et dont les émetteurs sont connectés aux bornes de sortie triphasées respectives du circuit principal (1, 4), dans lequel :
le premier circuit de coupure de couple (311, 611), en réponse à la première instruction de coupure de couple (TOF1), est configuré de manière à désactiver les éléments de commutation de second type de blocage inverse correspondant aux éléments de commutation de bras supérieur biphasés, indépendamment de la condition de génération des impulsions à partir du dispositif de commande ; et
le second circuit de coupure de couple (312, 612), en réponse à la seconde instruction de coupure de couple (TOF2), est configuré de manière à désactiver les éléments de commutation de premier type de blocage inverse correspondant aux éléments de commutation de bras inférieur biphasés, indépendamment de la condition de génération des impulsions à partir du dispositif de commande, dans lequel :
le premier circuit de coupure de couple (311, 611) est configuré de manière à désactiver les éléments de commutation de bras supérieur biphasés et les éléments de commutation de second type de blocage inverse correspondant aux éléments de commutation de bras supérieur biphasés, à un instant prédéterminé ultérieur à un point auquel la première instruction de coupure de couple (TOF1) est générée ; et
le second circuit de coupure de couple (312, 612) est configuré de manière à désactiver les éléments de commutation de bras inférieur biphasés et les éléments de commutation de premier type de blocage inverse correspondant aux éléments de commutation de bras inférieur biphasés, à un instant prédéterminé ultérieur à un point auquel la seconde instruction de coupure de couple (TOF2) est générée.

2. Système selon la revendication 1, dans lequel :
le premier circuit de coupure de couple (311, 611) désactive les éléments de commutation de bras supérieur biphasés à un instant prédéterminé ultérieur à un point auquel la première instruction de coupure de couple (TOF1) est générée ; et
le second circuit de coupure de couple (312, 612) désactive les éléments de commutation de bras inférieur biphasés à un instant prédéterminé ultérieur à un point auquel la seconde instruction de coupure de couple (TOF2) est générée.
